Europäisches Patentamt

European Patent Office

Office européen des brevets

(19)

(11) Numéro de publication : **0 018 895**
**B1**

(12) **FASCICULE DE BREVET EUROPÉEN**

(45) Date de publication du fascicule du brevet :
17.03.82

(51) Int. Cl.³ : **G 21 C 13/02, G 21 C 13/06**

(21) Numéro de dépôt : **80400558.5**

(22) Date de dépôt : **24.04.80**

(54) **Dispositif d'étanchéité pour un composant disposé verticalement à l'intérieur de l'enceinte primaire d'un réacteur nucléaire.**

(30) Priorité : **27.04.79 FR 7910740**

(43) Date de publication de la demande :
**12.11.80 (Bulletin 80/23)**

(45) Mention de la délivrance du brevet :
**17.03.82 Bulletin 82/11**

(84) Etats contractants désignés :
**BE DE GB IT NL**

(56) Documents cités :
**DE - A - 1 775 325**
**FR - A - 1 525 051**
**FR - A - 2 001 639**
**FR - A - 2 045 605**
**FR - A - 2 155 075**
**FR - A - 2 283 503**

(73) Titulaire : **NOVATOME**
**20 Avenue Edouard Herriot**
**F-92350 Le Plessis Robinson (FR)**

(72) Inventeur : **Le Roux, Jean**
**7 Résidence du Clos**
**F-91370 Verrieres Le Buisson (FR)**
Inventeur : **Plagnard, André**
**16 rue du Poitou**
**F-92120 Montrouge (FR)**

(74) Mandataire : **Bouget, Lucien et al**
**CREUSOT-LOIRE 15 rue Pasquier**
**F-75383 Paris Cedex 08 (FR)**

Imprimerie Jouve, 18, rue St-Denis, 75001 Paris, France

## Dispositif d'étanchéité pour un composant disposé verticalement à l'intérieur de l'enceinte primaire d'un réacteur nucléaire

L'invention concerne un dispositif d'étanchéité pour un composant disposé verticalement à l'intérieur de l'enceinte primaire d'un réacteur.

Dans les réacteurs nucléaires à neutrons rapides, la cuve est fermée par une dalle horizontale de forte épaisseur traversée par un certain nombre d'ouvertures au travers desquelles passent les composants du réacteur généralement disposés verticalement à l'intérieur de la cuve.

Ces composants comportent à leur partie supérieure une bride à diamètre plus important que le diamètre du composant qui vient se centrer lors de la mise en place du composant dans un logement à section circulaire prévu à l'intérieur de la dalle du réacteur. La bride reste néanmoins saillante au-dessus de la surface supérieure de la dalle du réacteur et le composant est maintenu en place grâce à une bride, appelée « bride anti-envol », dont une partie est en appui sur la surface supérieure horizontale de la bride du composant et dont une autre partie est fixée par des vis sur la dalle du réacteur.

Parmi les composants introduits verticalement dans la cuve du réacteur, certains sont de très grandes dimensions et reposent sur la dalle du réacteur par l'intermédiaire d'une bride dont le diamètre extérieur est voisin de 3 m pour les réacteurs nucléaires à neutrons rapides construits actuellement. Ces composants, appelés « gros composants », sont par exemple la pompe primaire, l'échangeur intermédiaire ou la tubulure de préchauffage du fluide caloporteur qui est généralement, dans le cas des réacteurs nucléaires à neutrons rapides, du sodium liquide.

D'autres composants, appelés « composants moyens », ont un diamètre extérieur de bride compris entre 1 et 2 m. Ce sont par exemple le dispositif de purification intégré du fluide caloporteur, la pompe de prélèvement, la pompe de l'installation de purification ou encore les bouchons d'accès au combustible.

D'autres composants enfin, appelés « petits composants », ont un diamètre inférieur à un mètre et sont montés en très grand nombre sur la dalle du réacteur. Une grande partie de ces composants constitue l'instrumentation qu'il est nécessaire de disposer à l'intérieur de la cuve pour les différentes mesures ou prélèvements à effectuer dans le réacteur.

L'ensemble de ces composants doit évidemment être fixé de façon étanche sur la dalle du réacteur pour éviter d'une part la sortie de vapeur de sodium liquide à l'extérieur de la cuve et pour éviter d'autre part toute contamination radioactive du voisinage de la cuve. L'étanchéité entre les brides des composants et la dalle du réacteur est réalisée jusqu'ici par interposition de joints toriques entre la surface inférieure de la bride et la surface supérieure du logement de la dalle dans laquelle vient se placer cette bride.

Ces dispositifs d'étanchéité constitués par deux joints toriques disposés concentriquement autour du composant entre la bride du composant et la dalle du réacteur présentent des inconvénients auxquels on n'a pas remédié jusqu'ici.

Par exemple, les brides des gros et moyens composants dont le diamètre peut être voisin de deux ou trois mètres présentent souvent des défauts de planéité entraînant des défauts d'étanchéité du dispositif à joints toriques. Ces défauts de planéité sont inhérents au procédé de fabrication de ces composants et peuvent être dus par exemple aux tensions engendrées dans le composant par les soudures.

D'autre part, les gros composants sont construits en position horizontale et lorsqu'on les redresse pour les mettre en position verticale dans la cuve du réacteur, ces composants subissent une certaine déformation qui rend très difficile l'obtention d'un plan bien perpendiculaire à l'axe du composant puisqu'au moment de l'exécution de ce plan de bride, le composant est en position horizontale.

Dans le cas de réacteurs nucléaires construits actuellement, on doit s'accommoder de cette inclinaison du plan de bride sur l'axe du composant lorsqu'on en assure l'étanchéité lors de sa mise en place sur la dalle du réacteur.

D'autre part, on effectue sur la plupart des composants du réacteur nucléaire des manutentions autres que celles nécessaires pour la mise en place du composant au moment de la construction du réacteur. Au cours de ces manutentions, des difficultés apparaissent lors de la remise en place des composants sur la dalle du réacteur, avec interposition des joints toriques d'étanchéité.

On a constaté par exemple la présence de condensats provenant des vapeurs de sodium qui remontent le long des cheminées des composants pendant la marche du réacteur, qui atteignent le premier joint torique assurant l'étanchéité et qui se condensent sur ce joint.

Lors du démontage du composant également, il arrive que des particules d'oxyde de sodium déposées dans le logement annulaire ménagé dans la dalle tombent sur les portées de joint servant à la mise en place des joints toriques d'étanchéité.

Il est bien évident que les condensats ou les dépôts au niveau des joints d'étanchéité nuisent à la remise en place correcte du composant et sont la cause de défauts d'étanchéité.

D'autre part, les démontages, les interventions sur les composants du réacteur et les remontages de ces composants amènent progressivement une dégradation de l'état de surface prévu à l'origine pour l'appui des joints et peuvent être la cause de défauts d'étanchéité apparaissant progressivement.

Lorsqu'on constate un défaut d'étanchéité, il est nécessaire d'opérer l'extraction du composant afin de pouvoir changer les joints et procéder au nettoyage des portées de joint avec un outillage spécial comportant un bouchon de protection et un sas spécial de nettoyage pour éviter la contamination au contact de l'ambiance du réacteur.

Au moment de la remise en place du composant, des particules provenant de la hotte de manutention du composant peuvent se redéposer sur les portées de joint et détériorer à nouveau les joints neufs.

On connaît par ailleurs des dispositifs d'étanchéité constitués par une bague porte-joints comportant deux ensembles de joints dont l'un fait l'étanchéité entre les surfaces latérales de la bague et de l'élément et dont l'autre fait l'étanchéité entre la dalle du réacteur et la surface inférieure de la bague porte-joints. De tels dispositifs nécessitent cependant l'utilisation de joints gonflables entre la bague porte-joints et la bride du composant et ne sont pas réellement amovibles (voir FR-A 2 045 605). Dans le cas du dispositif connu, un moyen d'injection de gaz d'isolement entre la bride du composant et la dalle assure l'isolement de l'intérieur de la cuve indépendamment de la bague porte-joints.

Le but de l'invention est donc de proposer un dispositif d'étanchéité pour un composant disposé verticalement à l'intérieur de l'enceinte primaire d'un réacteur nucléaire reposant par sa partie supérieure cylindrique formant une bride dont le diamètre est supérieur au diamètre du composant sur la dalle horizontale de fermeture de l'enceinte primaire autour du trou de passage du composant à travers la dalle et maintenu en place par une bride annulaire appelée bride anti-envol dont une partie est en appui sur la surface supérieure de la bride du composant et dont une autre partie comporte des dispositifs de fixation et de serrage de la bride du composant sur la dalle, comportant une bague porte-joints disposée autour de la bride du composant et reposant sur la dalle du réacteur en dessous de la bride anti-envol, sur laquelle sont disposés un premier ensemble de joints annulaires assurant l'étanchéité entre la surface latérale intérieure de la bague porte-joints et la surface latérale extérieure de la bride du composant dans sa partie située au-dessus de la dalle et un second ensemble de joints annulaires assurant l'étanchéité entre la surface de base de la bague et la dalle, un organe d'application d'une force verticale dirigée vers le bas, sur la bague porte-joints, fixé sur la bride anti-envol assurant la fixation de celle-ci et l'étanchéité par rapport à la dalle, cependant qu'un moyen d'injection de gaz d'isolement entre la bride du composant et la dalle assure l'isolement de l'intérieur de la cuve indépendamment de la bague porte-joints, dispositif d'étanchéité permettant d'éviter toute sortie de sodium sous forme de vapeur ou de tout autre substance radioactive de la cuve du réacteur, aussi bien pendant le fonctionnement du réacteur que pendant les opérations d'entretien de ce réacteur, d'effectuer rapidement et en toute sécurité les changements de composants et de préserver l'intégrité des portées de joints du dispositif d'étanchéité quelles que soient les opérations effectuées sur le composant, sans utilisation de joints gonflables.

Dans ce but, le dispositif d'étanchéité selon l'invention comporte en outre une bague de serrage disposée au-dessus de la bague porte-joints comportant un rebord intérieur venant en appui à l'intérieur du logement porte-joints, sur au moins l'un des joints pour l'application sur ce joint d'une pression permettant sa dilatation radiale, sous l'effet de l'organe d'application d'une force verticale agissant sur la bague porte-joints par l'intermédiaire de la bague de serrage.

Afin de bien faire comprendre l'invention, on va maintenant décrire à titre d'exemple non limitatif un mode de réalisation d'un dispositif d'étanchéité suivant l'invention, dans le cas de composants gros ou moyens.

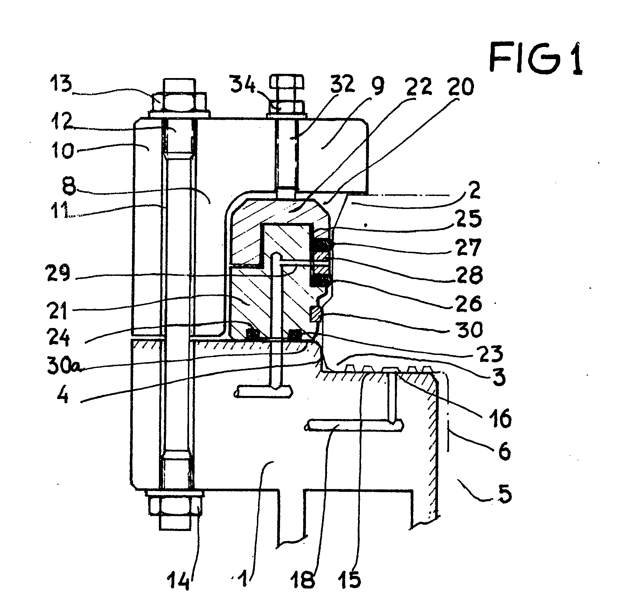

La figure 1 représente une demi-vue en coupe d'un dispositif d'étanchéité suivant l'invention appliqué au cas d'un composant gros ou moyen.

Sur la figure 1, on voit la dalle 1 du réacteur nucléaire sur laquelle repose la bride 2 d'un composant du réacteur nucléaire à l'intérieur d'un logement 3 ménagé dans la dalle 1, de forme cylindrique et comportant une surface latérale externe 4 assurant le centrage de la bride 2 par l'intermédiaire de sa surface latérale externe.

Au moment de sa mise en place dans le réacteur, le composant est ainsi automatiquement centré à l'intérieur du logement 3 si bien que le composant lui-même 5 de diamètre inférieur au diamètre de la bride 2 se trouve centré à l'intérieur du trou de passage 6 à l'intérieur de la dalle du réacteur.

Le composant est maintenu en place par une bride anti-envol 8 de forme annulaire et en appui par sa partie interne 9 sur la bride cylindrique du composant 5.

Dans sa partie externe 10, la bride anti-envol comporte des trous 11 pour le passage de vis 12 munies d'écrous 13 et 14 pour la fixation et le serrage de la bride anti-envol sur la bride 2 du composant 5.

La surface inférieure 15 de la bride 2 qui vient en appui contre le fond du logement 3 ménagé dans la dalle du réacteur est usinée pour constituer un labyrinthe 16 dont la partie centrale est réunie à une conduite 18 reliée à une source d'argon non représentée.

Le labyrinthe 16 et le moyen d'insufflation d'argon 18 constituent le dispositif d'isolement de l'intérieur de la cuve du réacteur indépendant des joints d'étanchéité.

Entre la surface supérieure de la dalle 1, la bride du composant 2 et la bride anti-envol est ménagé un espace annulaire 20 à l'intérieur duquel est disposée une bague porte-joints 21 et une bague de serrage 22 disposées l'une au-dessus de l'autre, en dessous de la partie interne 9 de la bride anti-envol 8.

La bague porte-joints 21 comporte sur sa surface inférieure deux portées de joints 23 et 24 permettant l'interposition de joints annulaires désignés par les mêmes repères que leur logement entre la bague porte-joints et la surface supérieure 30a de la dalle 1.

Sur la surface latérale intérieure de la bague porte-joints est également usinée une portée de joints 25 à l'intérieur de laquelle sont disposés deux joints annulaires 26 et 27 séparés par une bague d'écartement 28. Au niveau de cette bague, à la partie centrale de ce logement de joint 25 débouche une conduite 29 reliée à une source d'argon permettant l'injection de cet argon dans la zone disposée entre les joints 26 et 27 du logement de joint 25. Ce dispositif d'insufflation d'argon 29 permet de contrôler les joints par mesure précise de la pression et du débit de l'argon dans la conduite 29. La bague intermédiaire 28 permet de maintenir l'écartement entre les joints et présente des ouvertures pour l'insufflation d'argon.

La bague porte-joints 21 comporte également un patin de centrage 30 de forme annulaire ayant une surface intérieure sphérique permettant un centrage parfait de la bague porte-joints autour de la bride du composant, elle-même centrée à l'intérieur du logement 3 ménagé dans la dalle du réacteur.

La bague de serrage 22 comporte en section transversale un profil permettant d'une part son centrage parfait sur la bague porte-joints 21 et d'autre part l'introduction de son rebord intérieur dans le logement porte-joints 25 afin que ce rebord intérieur puisse exercer une pression sur le joint 27 et par l'intermédiaire de la bague intermédiaire 28, sur le joint 26.

La pression sur la bague de serrage est exercée par un ensemble de vis 32 en prise avec un taraudage ménagé dans la partie 9 de la bride anti-envol, régulièrement espacées sur la partie 9 de la bride anti-envol. Chacune des vis 32 est munie d'un écrou de blocage 34 lorsque le serrage régulier de la bague de serrage 22 a été réalisé par un vissage des vis 32 dans les taraudages correspondants de la bride anti-envol.

L'ensemble des vis 32 et de leurs écrous de blocage 34 constitue l'organe d'application de la force d'appui verticale et vers le bas sur la bague porte-joints.

On va maintenant décrire une opération de changement des joints d'un dispositif d'étanchéité suivant l'invention.

Au départ de l'opération de changement de joints et pendant toute cette opération, on insuffle de l'argon de barrage dans le labyrinthe 16 par l'intermédiaire de la conduite d'insufflation d'argon 18.

L'opération commence par un démontage de la bride anti-envol 8 en dévissant les écrous 13 ou 14 maintenant cette bride serrée contre la bride du composant ; puis on démonte la bague porte-joints qui est libérée lorsque la bride anti-envol a été démontée.

On peut alors effectuer le démontage des joints, le nettoyage des portées de joint et le changement de ces joints en toute sécurité puisque le barrage d'argon dans le labyrinthe 16, grâce à la conduite 18, interdit toute sortie de vapeur de sodium. Ceci peut se faire sans démonter le composant et sans soulever sa bride au-dessus de la dalle du réacteur

On remet en place la bague porte-joints puis la bride anti-envol au-dessus de cette bague porte-joints et on assure son blocage grâce aux vis 32 et aux écrous 34. On opère alors un test d'étanchéité des joints et l'on arrête, si ce test est satisfaisant, le soufflage de l'argon de barrage le labyrinthe 16.

On voit qu'ainsi les changements de joints d'étanchéité dans un dispositif suivant l'invention sont particulièrement faciles et rapides.

On peut remarquer également que le contrôle des joints est assuré en permanence par l'insufflation d'argon dans la conduite 29, c'est-à-dire dans les espaces ménagés entre les joints d'étanchéité intérieurs et latéraux et enregistrement continu de la pression et du débit d'argon.

De même, lors des opérations de mise en place ou de démontage d'un composant qui nécessitent l'utilisation d'une hotte spéciale de manutention qu'on vient relier à un sas en position au-dessus du composant, les opérations sont grandement facilitées par la disposition des joints à l'extérieur d'un barrage réalisé par l'insufflation d'argon dans un labyrinthe interdisant la sortie de vapeur contaminée de la cuve du réacteur.

Le dispositif suivant l'invention permet en effet d'avoir un accès direct aux joints d'étanchéité, après enlèvement de la hotte spéciale de manutention et du sas.

Dans les dispositifs de l'art antérieur, où les joints d'étanchéité étaient intercalés entre la bride du composant et la dalle du réacteur, c'est-à-dire à l'emplacement où se trouve le labyrinthe 16 du dispositif suivant l'invention, ces joints d'étanchéité constituaient le seul barrage entre l'intérieur de la cuve du réacteur et l'atmosphère extérieure. Lors des changements de joints ou de composants, il fallait utiliser une hotte spéciale mise en place au-dessus du composant pendant la mise en place des joints et tant que l'étanchéité n'était pas réalisée grâce à ces joints. Le dispositif suivant l'invention permet de s'affranchir de cette contrainte.

On voit donc que les avantages principaux du dispositif suivant l'invention sont d'améliorer l'étanchéité des composants par rapport à la cuve du réacteur nucléaire et en particulier, d'éviter le mauvais portage des joints dû au voilage des brides dans le cas des composants de grand diamètre et de forte épaisseur, de faciliter grandement les opérations de changement de joints et de nettoyage des portées de joints et d'éviter la détérioration des joints et des portées de joints, au cours des opérations de montage et de démontage des composants.

On peut imaginer, à la place d'un labyrinthe à l'intérieur duquel on insuffle de l'argon, un dispositif quelconque pour insuffler de l'argon entre la bride du composant et la surface supérieure de la dalle du réacteur nucléaire. A la place d'argon on peut évidemment insuffler tout autre gaz d'isolation permettant de refouler les vapeurs de sodium à l'intérieur de la cuve du réacteur nucléaire.

Enfin, le dispositif d'étanchéité suivant l'invention s'applique pour le montage de tout composant dans une cuve ou une enceinte primaire de réacteur nucléaire, que ce réacteur soit par exemple un réacteur à neutrons rapides, un réacteur graphite-gaz, un réacteur à haute température ou un autre type de réacteur.

**Revendications**

1. Dispositif d'étanchéité pour un composant (5) disposé verticalement à l'intérieur de l'enceinte primaire d'un réacteur nucléaire reposant par sa partie supérieure cylindrique formant une bride (2) dont le diamètre est supérieur au diamètre du composant (5), sur la dalle horizontale de fermeture (1) de l'enceinte primaire autour du trou de passage (6) du composant à travers la dalle et maintenu en place par une bride annulaire (8) appelée bride anti-envol dont une partie (9) est en appui sur la surface supérieure de la bride (2) du composant et dont une autre partie (10) comporte des dispositifs de fixation et de serrage (12, 13, 14) de la bride (2) du composant (5) sur la dalle, comportant une bague porte-joints (21) disposée autour de la bride (2) du composant et reposant sur la dalle (1) du réacteur en dessous de la bride anti-envol (8), sur laquelle sont disposés un premier ensemble de joints annulaires (26, 27) assurant l'étanchéité entre la surface latérale intérieure de la bague porte-joints (21) et la surface latérale extérieure de la bride (2) du composant dans sa partie située au-dessus de la dalle (1) et un second ensemble de joints annulaires (23, 24) assurant l'étanchéité entre la surface de base de la bague (21) et la dalle (1), un organe d'application (32, 34) d'une force verticale dirigée vers le bas, sur la bague porte-joints (21) fixé sur la bride anti-envol (8) assurant la fixation de celle-ci et l'étanchéité par rapport à la dalle (1), cependant qu'un moyen d'injection de gaz d'isolement (16, 18) entre la bride (2) du composant et la dalle (4) assure l'isolement de l'intérieur de la cuve indépendamment de la bague porte-joints (21), caractérisé par le fait qu'il comporte en outre une bague de serrage (22) disposée au-dessus de la bague porte-joints (21) comportant un rebord intérieur venant en appui à l'intérieur du logement porte-joints (25), sur au moins l'un des joints (27) pour l'application sur ce joint (27) d'une pression permettant sa dilatation radiale, sous l'effet de l'organe d'application d'une force verticale (32, 34) agissant sur la bague porte-joints (21) par l'intermédiaire de la bague de serrage (22).

2. Dispositif d'étanchéité suivant la revendication 1, caractérisé par le fait que chacun des ensembles de joints (23-24 et 26-27) de la bague porte-joints (21) comporte au moins deux joints entre lesquels débouche un tube d'insufflation (29) d'un gaz de contrôle de l'étanchéité des joints (23-24 et 26-27).

3. Dispositif d'étanchéité suivant l'une quelconque des revendications 1 et 2, caractérisé par le fait que l'organe d'application d'une force d'appui verticale (32, 34) sur la bague porte-joints (21) est constitué par un ensemble de vis (32) en prise avec des taraudages traversant la bride anti-envol (8) venant en contact par leur partie inférieure avec une surface d'application de la force d'appui sur la bague de serrage (22) et munies d'écrous de blocage (34).

4. Dispositif d'étanchéité suivant l'une quelconque des revendications 1, 2 et 3, caractérisé par le fait que le moyen d'injection du gaz d'isolement entre la bride (2) du composant (5) et la dalle (1) est constitué par un labyrinthe (16) usiné dans la surface inférieure (15) de la bride (8) venant en appui sur la dalle (1) à l'intérieur duquel débouche une canalisation (18) d'amenée d'un gaz d'isolement.

**Claims**

1. Sealing device for a component (5) arranged vertically inside the primary vessel of a nuclear reactor which rests, by means of its upper cylindrical part which constitutes a flange (2) having a diameter which is greater than the diameter of the component (5), on the horizontal closure plate (1) of the primary vessel around the hole providing a passage (6) for the component through the plate, said component being held in place by means of an annular flange (8) referred to as the anti-fly-off flange which has one part (9) which bears on the upper surface of the flange (2) of said component and having a further part (10) which includes means for fixing and clamping (12, 13, 14) the flange (2) of the component (5) onto the plate, including a seal-carrying ring (21) arranged around the flange (2) of said component and resting on the plate (1) of the reactor below the anti-fly-off flange (8), carrying a first set of annular seals (26, 27) providing a seal between the inside lateral surface of the seal-carrying ring (21) and the outer lateral surface of the flange (2) of the component at its portion located above the plate (1) and a second set of annular seals (23, 24) providing a seal between the bottom surface of the ring (21) and the plate (1), a body (32, 34) for applying a vertical force which is downwardly directed onto the seal-carrying ring (21) being fixed to the anti-fly-off flange (8) so as to provide for fixing in place of the latter and for sealing with respect to the plate (1), whilst a means for injecting isolating gas (16, 18) between the flange (2) of the component and the plate (4) guarantees isolation of the inside of the vessel independently of the seal-carrying ring (21), characterised by the fact that it further includes a clamping ring (22) arranged above the seal-carrying ring (21), said clamping ring including an inner raised edge which bears, inside the seal-carrying housing (25), on at least one of the seals (27) for applying a sufficient pressure to this seal (27) to cause its radial expansion resulting from the application of the vertical force by the force applying body (32, 34) acting on the seal-carrying ring (21) via the intermediary of the clamping ring (22).

2. Sealing device according to Claim 1, characterised by the fact that each one of the seal assemblies (23-24 and 26-27) of the seal-carrying ring (21) includes at least two seals between which a tube (29) for pumping in a gas for controlling the sealing of the seals (23, 24 and 26-27) discharges.

3. Sealing device according to either one of Claims 1 and 2, characterised by the fact that the body (32, 34) for applying a force bearing vertically on the seal-carrying ring (21) is made up by a set of screws (32) which engage with threaded passages passing through the anti-fly-off flange (8) with their lower ends coming into contact with a surface for applying said bearing force onto the clamping ring (22), and are provided with locking screws (34).

4. Sealing device according to any one of Claims 1, 2 and 3, characterised by the fact that the means for injecting the isolating gas between the flange (2) of the component (5) and the plate (1) is constituted by a labyrinth of passages (16) machined in the lower surface (15) of the flange (8) bearing on the plate (1), inside of which a channel (18) for introducing an isolating gas discharges.

**Ansprüche**

1. Dichtungsvorrichtung für eine senkrecht innen in der Primärhülle eines Kernreaktors angeordnete Komponente (5), die mit ihrem oberen zylindrischen Teil, der einem Flansch (2) mit grösserem Durchmesser als der der Komponenten (5) bildet, auf der waagerechten Verschlussplatte (1) der Primärhülle um die Öffnung (6) für die Durchführung der Komponenten durch die Platte ruht und durch einen ringförmigen, Sicherungsflansch genannten Flansch (8) gehalten wird, dessen einer Teil (9) auf der oberen Fläche des Flansches (2) der Komponenten aufliegt und dessen anderer Teil (10) Vorrichtungen (12, 13, 14) aufweist zum Befestigen und Anziehen des Flansches (2) der Komponenten (5) auf der Platte, mit einem Dichtungshaltering (21), der um den Flansch (2) der Komponenten angeordnet ist und auf der Platte (1) des Reaktors unter dem Sicherungsflansch (8) ruht, auf dem eine erste Anordnung Ringdichtungen (26, 27) angeordnet ist, die die Dichtheit zwischen der inneren Seitenfläche des Dichtungshalterings (21) und der äusseren Seitenfläche des Flansches (2) der Komponenten in dem über der Platte (1) gelegenen Teil gewährleistet, sowie eine zweite Anordnung Ringdichtungen (23, 24), die die Dichtheit zwischen der Grundfläche des Rings (21) und der Platte (1) gewährleistet, wobei ein auf dem Sicherungsflansch (8) befestigtes Organ (32, 34) für den Angriff einer senkrechten, nach unten gerichteten Kraft auf den Dichtungshaltering (21) die Befestigung dieses Flansches und die Dichtheit zur Platte (1) gewährleistet, während ein Isoliergaseinspritzmittel (16, 18) zwischen dem Flansch (2) der Komponenten und der Platte (4) die Isolierung vom Behälterinnern unabhängig vom Dichtungshaltering (21) gewährleistet, dadurch gekennzeichnet, dass sie ausserdem einem Schrumpfring (22) aufweist, der über dem Dichtungshaltering (21) angeordnet ist und einen Innenrand aufweist, der innen in der Dichtungshaltelagerung (25) auf mindestens eine der Dichtungen (27) Drückt, um einem die Radialdehnung ermöglichenden Druck auf diese Dichtung (27) auszuüben, unter Einwirkung des Organs zum Angriff einer senkrechten Kraft (32, 34), die über den Schrumpfring (22) auf den Dichtungshaltering (21) einwirkt.

2. Dichtungsvorrichtung nach Anspruch 1, dadurch gekennzeichnet, dass jede der Dichtungsanordnungen (23-24 und 26-27) des Dichtungshalterings (21) mindestens zwei Dichtungen aufweist, zwischen denen ein Rohr (29) mündet zum Einblasen eines Gases für die Dichtheitskontrolle der Dichtungen (23-24 und 26-27).

3. Dichtungsvorrichtung nach irgendeinem der Ansprüche 1 und 2, dadurch gekennzeichnet, dass das Organ zum Angriff einer senkrechten Druckkraft (32, 34) auf den Dichtungshaltering (21) sich aus einer Schraubenanordnung (32) zusammensetzt, die mit durch den Sicherungsflansch (8) gehenden Gewinden eingreift, mit ihrem unteren Teil eine Kraftangriffsfläche auf dem Schrumpfring (22) berührt und mit Sicherungsmuttern (34) ausgestattet ist.

4. Dichtungsvorrichtung nach irgendeinem der Ansprüche 1, 2 und 3, dadurch gekennzeichnet, dass das Mittel zum Einspritzen des Isoliergases zwischen dem Flansch (2) der Komponenten (5) und der Platte (1) ein in die untere Fläche (15) des Flansches (8) bearbeitetes, auf die Platte (1) drückendes Labyrinth ist, in das eine Isoliergaszuführleitung (18) mündet.

FIG 1